# EUROPÄISCHE PATENTSCHRIFT

(11) **EP 2 126 354 B1**
(45) Veröffentlichungstag und Bekanntmachung des Hinweises auf die Patenterteilung: **17.10.2012**
(21) Anmeldenummer: 08707361.5
(22) Anmeldetag: 29.01.2008
(51) Int. Cl.: F16H 37/08, F03D 11/02, F16H 1/28

(54) **WINDKRAFTANLAGE UND GETRIEBE HIERFÜR**
WIND POWER INSTALLATION AND TRANSMISSION FOR SAME
ÉOLIENNE ET ENGRENAGE DESTINÉ À CELLE-CI

(30) Priorität: 27.02.2007 DE 102007009931; 02.04.2007 DE 102007016190
(43) Veröffentlichungstag der Anmeldung: 02.12.2009
(73) Patentinhaber: Giger, Urs, 5642 Mühlau (CH)
(72) Erfinder: Giger, Urs, 5642 Mühlau (CH)
(74) Vertreter: Castell, Klaus
(86) Internationale Anmeldenummer: PCT/EP2008/000658
(87) Internationale Veröffentlichungsnummer: WO 2008/104257

(56) Entgegenhaltungen:
- EP-A1- 1 788 281
- WO-A1-02/079644
- WO-A1-2010/030724
- WO-A2-2009/043330
- WO-A2-2010/121586
- WO-A2-2011/037696
- "Berechnung und Herstellung von Verzahnungen in Theorie und Praxis" MAAG-TASCHENBUCH, Oktober 1985 (1985-10), Seiten 234-236, XP007904949 Zürich
- MAX BODMER: "Planetenkoppelgetriebe mit Leistungsverzweigung", ERNEUERBARE ENERGIEN, SUNMEDIA VERLAGS- UND KONGRESSGESELLSCHAFT MBH, DE, 1 February 2004 (2004-02-01), pages 23-25, XP002530772, ISSN: 1436-8773

## Beschreibung

Die Erfindung betrifft eine Windkraftanlage und ein Getriebe für eine Windkraftanlage.

Eine Windkraftanlage wandelt die kinetische Energie des Windes in elektrische Energie um und speist sie in das Stromnetz ein. Dies geschieht, indem die Bewegungsenergie der Windströmung auf Rotorblätter wirkt. Diese sind in der Nabe gelagert, sodass sich der gesamte Rotor mit Nabe in eine Drehbewegung versetzt. Die Nabe ist über eine Welle an ein Getriebe angeschlossen. Dies ist meist ein Planetengetriebe. Die Rotation wird anschließend an einen Generator weitergegeben, welcher den elektrischen Strom hervorbringt.

Die US 2006/0104815 A1 zeigt den Kopf einer Windkraftanlage mit einer Nabe, die beim Übergang zur Welle so gelagert ist, dass die Querkräfte dort aufgenommen werden. Von der Nabe zum Generator kann daher eine relativ dünne Welle verwendet werden, die lediglich torsionsfest sein muss. Diese ist dementsprechend kostengünstig.

Die EP 1 788 281 A1 zeigt ein Getriebe für eine Windkraftanlage.

Die EP 0 792 415 B2 zeigt ein Planetengetriebe für eine Windkraftanlage mit einem in einem Getriebegehäuse gelagerten Planetenträger, der mit einer querkraftbelasteten Antriebswelle verbunden ist. Die Antriebswelle ist über den Planetenträger im Getriebe gelagert.

Die EP 1 482 210 B1 schlägt ein Getriebe mit einer leistungsaddierenden Stufe vor, welche zwei Planetengetriebe hat, jeweils mit einer Sonne, Planetenrädern, einem Hohlrad und einem gemeinsamen Planetenträger.

Der Inhaber jenes Patents hat ebenfalls vorgeschlagen, ein Koppelgetriebe in die Rotornabe zu integrieren. Mit dem in die Rotornabe integrierten Getriebe und der Lagerung in nur einem Rotorhauptlager lässt sich eine deutliche Erhöhung der Leistungsdichte erreichen.

Die EP 1 544 504 A2 beschreibt ein Kegelwälzlager für ein Windkraftgetriebe.

Aus dem Aufsatz "Planetenkoppelgetriebe mit "Leistungsverzweigung" in "Erneuerbare Energien 2/2004 " ist eine Windkraftanlage mit den Merkmalen nach dem Oberbegriff des Anspruchs 1 bekannt.

Der Erfindung liegt die Aufgabe zu Grunde, eine verbesserte Windkraftanlage zur Verfügung zu stellen.

Diese Aufgabe löst eine Windkraftanlage mit den Merkmalen des Anspruchs 1.

In herkömmlichen Windkraftanlagen sind die Welle, das Getriebe und der Generator seriell hintereinander als einzelne Komponenten angeordnet. Im Falle eines Schadens erlaubt dies ein einfaches Auseinandernehmen der Komponenten, um eine oder mehrere Komponenten zu ersetzen. Die Struktur baut allerdings insgesamt recht lang und ist dementsprechend schwer und relativ teuer in der Herstellung.

Der hier vorgestellte Aspekt der Erfindung ermöglicht eine deutlich kürzere Bauweise des Kopfes der Windkraftanlage. Dadurch, dass das Getriebe zumindest zum Teil innerhalb der Welle angeordnet ist, kann die Anordnung aus Welle und Getriebe entsprechend kürzer bauen.

Dies ist insbesondere bei Windkraftanlagen mit einer Nennleistung von 2,5 MW, 3 MW, 5 MW oder mehr interessant, weil die Getriebe solcher Anlagen in der Regel einen Durchmesser von in der Regel mehr als 2 Metern haben. Die Anlagen sind also sehr groß und erfordern entsprechend viel Werkstoff. Die in Frage kommenden Werkstoffe müssen sehr hochwertig sein, da sehr große Drehmomente und Kräfte abgetragen werden müssen. Bei Prototypen und Prototypenberechnungen des Erfinders haben sich Verkürzungen bis zu 1000 mm und mehr ergeben. Überschlägig können somit Masseneinsparungen von beispielsweise 10 Tonnen erreicht werden. Trotzdem berechnen sich die Sicherheitswerte der hier vorgeschlagenen Windkraftanlage deutlich größer als bei herkömmlichen Anlagen.

Das Getriebe ist bevorzugt als mehrstufiges Planetengetriebe ausgebildet, wobei mindestens eine Stufe vollständig innerhalb der Welle angeordnet ist. Planetengetriebe haben sich für Windkraftanlagen bewährt. Diese können mehrstufig hintereinander angeordnet sein, was in der Regel für eine Aufteilung des Drehmoments auf zwei Stufen eingesetzt wird. Die Stufen liegen axial hintereinander.

Eine, zwei oder mehr Stufen können in der Hohlwelle integriert sein. Die Hohlwelle kann sodann als Hohlrad für eine oder mehrere Stufen wirken, wobei durch die radiale Ausdehnung der einzelnen Stufen kontrolliert werden kann, ob diese mit dem Hohlrad in Verbindung kommen. Es ist denkbar, einzelne Stufen so zu gestalten, dass sie mit der Hohlwelle keine radiale Berührung haben.

Wenn die Welle ein rotierendes Hohlrad für ein Planetengetriebe aufweist, kann auf ein separates Hohlrad verzichtet werden. So ist es denkbar, dass direkt an der Welle eine Verzahnung nach radial innen angeordnet ist. Auch ist denkbar, dass ein Hohlrad mit der Welle drehfest verbunden ist, so dass sich die Verzahnung des Hohlrades radial nach innen innerhalb der hohlen Welle richtet.

Es versteht sich, dass auch eine Konstruktion der Welle mit mehreren Hohlrädern für mehrere Planentengetriebestufen von Vorteil ist.

Unabhängig davon, ob die Welle ein rotierendes Hohlrad aufweist, weist die Welle einen Planetenträger auf. In der Regel wird es konstruktiv äußerst aufwändig sein, die Welle unmittelbar einstückig als Planetenträger auszubilden. Es ist jedoch ohne weiteres denkbar, dass drehfest mit der Welle ein Planetenträger verbunden ist, der dazu vorgesehen ist und entsprechenden Freiraum lässt, dass von der offenen Stirnseite der Welle übrige Teile eines Planetengetriebes in die Welle eingeschoben oder anderweitig eingebaut werden können.

Wenn die Welle ein rotierendes Hohlrad und einen Planetenträger aufweist, wird vorgeschlagen, dass diese unterschiedlichen Stufen zugeordnet sind, welche gekoppelt sind. Es wurde bereits erwähnt, dass ein Koppelgetriebe viele Vorteile in der Windindustrie bietet. Trotz geringer Masse und kleinem Bauvolumen wird eine große Übersetzung erzielt. Damit eignet sich ein Koppelgetriebe besonders für leistungsstarke Anlagen, deren langsam laufende, große Rotoren ein hohes Antriebsmoment aufbringen. Oft wird eine Leistungsaufteilung auf zwei Stufen gewählt. Dadurch kann eine kompakte Lösung konstruiert werden. Diese Technologie wurde in einer N60-Windturbine der Firma Nordex getestet.

In einer besonders bevorzugten Ausführungsform weist das Getriebe ein erste Stufe auf, bei welcher die Welle einen Planetenträger aufweist, während eine Sonne mittelbar zu einem Generator führt, wobei ein Hohlrad durch eine Koppelung zu einer zweiten Stufe ausgebildet ist, bei welcher die Welle ein Hohlrad aufweist, ein Planetenträger fixiert ist, und die Koppelung als Sonne ausgebildet ist. Eine solche Bauweise beschreibt zwei Stufen, welche innerhalb der Hohlwelle angeordnet sind. Für eine der beiden Stufen, in diesen Falle für die zweite Stufe, dient die Welle als Hohlrad. Für die erste Stufe hingegen dient die Welle als Planetenträger. Eine Koppelung zwischen der ersten und der zweiten Stufe führt über ein Koppelglied, welches in der ersten Stufe als Holhlrad ausgebildet ist, dessen Außendurchmesser aber geringer sind als die Innendurchmesser der Hohlwelle, und welches für die zweite Stufe die Sonne bildet. Bei einer solchen Konstruktion lässt sich mit äußerst geringem Bauraum eine vorteilhafte Aufteilung der Leistung auf zwei Stufen erreichen. Aus der Welle hinaus ragen nur wenige Bauteile, nämlich die Sonne der ersten Stufe und der Planetenträger der zweiten Stufe. Der Generator kann daher sehr nahe hinter dem Ende der Welle angeordnet werden.

Die Welle ist in einem vorgespannten, axial zweigeteilten Wälzlager gelagert. Eine solche Lagerung ist beispielsweise in der EP 1 544 504 zu entnehmen. Die axiale Zweiteilung hat bevorzugt auch einen radialen Versatz der Lagerstellen. So ist es gut denkbar, dass eine zur Nabe gewandte Lagerstelle einen deutlich kleineren Radius hat als die zum Getriebe gewandte Lagerstelle.

Bevorzugt ist eine Drehmomentstütze mit einem Hauptlageraußenring verbunden. Da gegen das von der Nabe kommende Drehmoment ein Gegenmoment bereitgestellt werden muss, ist eine Drehmomentstütze notwendig. Diese ist in der Regel als ein flaches Bauteil gestaltet, welches hinten an das Getriebe angeflanscht ist. Die Drehmomentstütze weist einen radial oder anderweitig seitlich hervorstehenden Arm auf, der sich am Kopf der Windkraftanlage abstützt, beispielsweise ungefähr an der Azimuthlagerung.

Wenn die Drehmomentstütze mit einem Hauptlageraußenring drehfest verbunden ist, dann kann dieser ohne weitere Befestigung seine Funktion als Hauptlager der Welle erfüllen. Der Hauptlageraußenring kann beispielsweise axial in Richtung zur Nabe hin an die Drehmomentstütze angeflanscht sein. Auch eine einstückige Ausgestaltung ist denkbar.

Planeten des Planetengetriebes sind bevorzugt auf flexiblen Planetenbolzen gelagert. Eine solche Lagerung wird herkömmlich als "flex-pin"-Technologie bezeichnet. Die Technologie ist in den 60er Jahren angewendet worden, um bei Großgetrieben Produktionsungenauigkeiten der Bolzen ausgleichen zu können. Der Erfinder hat erkannt, dass der Einsatz der flex-pin-Technologie gerade bei der Gestaltung von modernen Windkraftanlagen hervorragend zum Einsatz kommen kann, und zwar zum Ausgleich zwischen sich im Betrieb dauerhaft infolge der großen Kräfte verlagernden Wellen und stationären Elementen, wobei ein Planetengetriebe eingebunden ist.

Es wird vorgeschlagen, dass das Getriebe zum Demontieren, sei es zur Wartung, zum Abbau, zur Reparatur oder zum Aufbau, axial auf der Welle ziehbar gestaltet ist. Dies setzt im wesentlichen voraus, dass im axialen Verlauf des Getriebes innerhalb der Welle hin zum Getriebe die Welle einen steten Durchmesser aufweist oder sich sogar vergrößert. Hiermit korrespondiert ideal ein Getriebe, welches - wenn mehrere Getriebestufen innerhalb der Hohlwelle angeordnet sein sollen - stufenweise eine Verjüngung in die Welle hinein vorsieht.

Es versteht sich, dass nicht nur eine Windkraftanlage im Ganzen von Vorteil ist, wenn sie wie vorstehend beschrieben ausgestaltet ist. Vielmehr erstrecken sich die Vorteile unmittelbar auf ein Getriebe für eine Windkraftanlage.

In diesem Zusammenhang sei darauf hingewiesen, dass vorliegend unter "Getriebe" auch ein nicht vollständiges Getriebe verstanden werden kann. Dies insbesondere vor dem Hintergrund, dass bei geeigneter Gestaltung die Hohlwelle selbst als ein Teil des Getriebes, nämlich beispielsweise als Hohlrad und/oder als Planetenträger und/oder als Sonne dienen kann. Wenn bei einer solchen Gestaltung von der Hohlwelle einerseits und dem Getriebe andererseits gesprochen wird, so ist das so zu verstehen, dass das "Getriebe" die notwendigen Teile des Planetengetriebes mit Ausnahme desjenigen Teiles umfasst, welches von der Welle bereitgestellt wird.

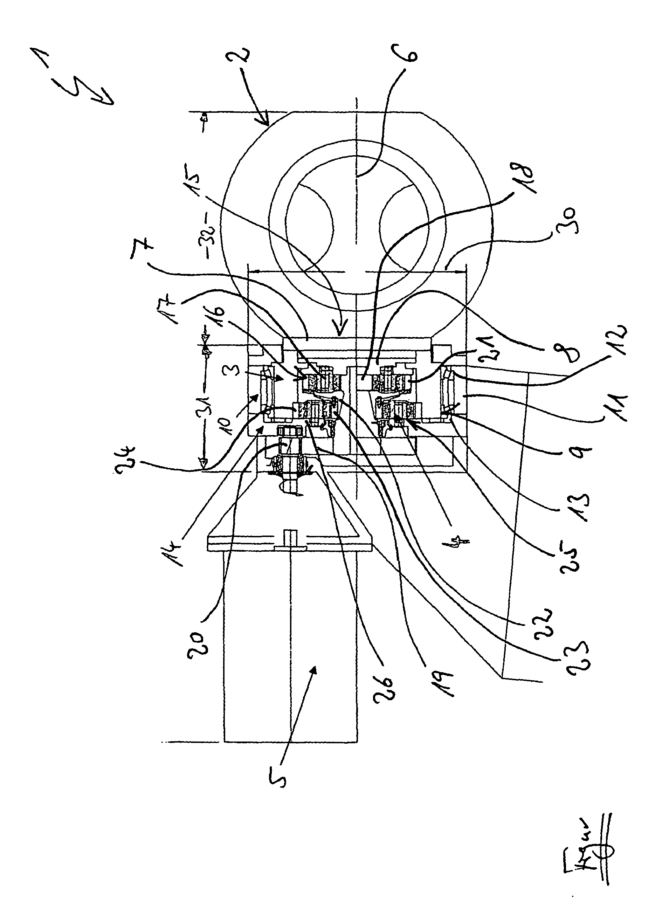

Die Erfindung wird nachstehend anhand eines Ausführungsbeispieles unter Bezugnahme auf die Zeichnung näher erläutert. Dort zeigt:

Die einzige Figur
einen schematischen Längsschnitt durch eine Rotornabe mit angeschlossener Welle, darin integriertem Getriebe und abschließenden Generator.

Ein zeichnerisch reduzierter Windkraftanlagenkopf 1 in der Figur besteht im wesentlichen aus der Nabe 2, der Rotorwelle 3, dem darin angeordneten Getriebe 4 und dem angeschlossenen Generator 5.

An die Nabe 2 sind im Betrieb der Windkraftanlage die Rotoren angeschlossen, welche für eine Rotation der Nabe um eine Längsachse 6 des Rotorkopfes sorgen.

Rückwärtig der Nabe 2 ist diese an eine Wellenanschlussscheibe 7 angeflanscht. Ein von der Nabe 2 kommendes Drehmoment um die Längsachse 6 wird daher unvermindert auf die Wellenanschluss-Scheibe 7 übertragen.

Im weiteren Verlauf der Kräfte, in der Figur von rechts nach links, sind an die Wellenanschlussscheibe 7 zwei Bauelemente angeflanscht, nämlich zum einen radial außen die Rotorwelle 3, zum anderen radial weiter innen ein erster Planetenträger 8.

An einer Außenseite 9 der Welle 3 ist diese innerhalb eines Gehäuses 10 von einem Hauptlagerring 11 aufgenommen. Eine Lagerung erfolgt über zwei Ringe vorgespannter Kegelwälzlager 12, 13.

Der Hauptlagerring 11 ist an eine scheibenförmig ausgestaltete Drehmomentstütze 14 angeflanscht.

Dadurch, dass die Welle 3 hohl ausgebildet ist, ist in ihrem Innenraum 15 das Getriebe 4 angeordnet.

Das Getriebe 4 ist als Planetengetriebe mit zwei Stufen innerhalb der Rotorwelle 3 ausgebildet:

In einer ersten Stufe trägt der erste Planetenträger 8 eine Anzahl Planetenräder 16 (exemplarisch gekennzeichnet), und zwar jeweils in flex-pin-Lagerung. Die Planetenräder 16 sind also auf in S-Form elastisch nach radial innen, radial außen oder tangential verschieblichen Planetenlagerbolzen 17 (exemplarisch gekennzeichnet) gelagert.

Eine erste Sonne 18 führt koaxial mit der Längsachse 6 nach hinten aus der Rotorwelle 3 hinaus und durch die Drehmomentstütze 14 hindurch. Dort ist sie über ein radial großes Zahnrad 19 an ein kleines Zahnrad 20 zum Einbringen des Momentes in den Generator 5 angeschlossen.

Ein erstes Hohlrad 21, also das Hohlrad der ersten Getriebestufe, ist Teil eines Koppelungsglieds 22, welches hinsichtlich der zweiten Getriebestufe die Sonne darstellt, also ein zweite Sonne 23. Ein zweites Hohlrad 24 ist unmittelbar an der Innenseite der Hohlwelle 3 kurz vor deren axialem Ende ausgebildet.

Eine zweite Anzahl Planeten 25 (exemplarisch gekennzeichnet) ist jeweils in flex-pin-Technologie gelagert an einem zweitem Planetenträger 26, welcher unmittelbar durch die Drehmomentstütze 14 gebildet wird.

Im Betrieb des Getriebes 4 bringt die Nabe 2 ein Drehmoment mit einer Eingangsleistung auf die Wellenanschlussscheibe 7 auf. Diese teilt die Leistung auf die beiden Stufen auf: Ein erster Teil fließt über die Welle 3 und das zweite Hohlrad 24 in die zweite Stufe hinein. Dieses Hohlrad treibt die Planetenräder 25 an, da der zweite Planetenträger 26 unmittelbar durch die - fixiert stehende - Drehmomentstütze 14 gebildet werden. Die Planetenräder 25 laufen daher in der selben Orientierung wie das Hohlrad 24 an der Hohlwelle 3.

Dies treibt die zweite Sonne 23 gegen diesen Drehsinn an, und somit das Koppelungsglied 22, welches zur ersten Stufe führt.

Das Koppelungsglied 21 bildet in der ersten Stufe das erste Hohlrad 16. In Folge der starren Bauweise des Koppelungsgliedes 22 in Form eines Kragens mit zwei unterschiedlichen Durchmessern, wobei am kleineren Durchmesser eine Außenverzahnung und am größeren Durchmesser eine Innenverzahnung liegen, läuft das erste Hohlrad 16 der ersten Stufe des Getriebes des Getriebes 4 gegen den Drehsinn der Nabe 2. Da der erste Planetenträger 8 die dortigen Planetenräder mit der Drehrichtung der Nabe 2 und mit dem übrigen Teil des eingehenden Drehmoments führt, drehen sich auch die Planetenräder der ersten Stufe gegen der Drehsinn der Nabe 2 und summieren den Abtrieb auf die Sonne 18 mit der dort angeschlossenen Welle, welche durch die Drehmomentstütze 14 hindurch verläuft.

Jenseits der Drehmomentstütze 14 wird über das große Zahnrad 19 und das daran angeschlossene, exzentrisch angeordnete kleine Zahnrad 20 das gesamte Drehmoment bei höherer Drehzahl übertragen. Diese Stirnradstufe mit Offset leitet die Gesamtleistung in den Generator 5.

Bei einem radialen Durchmesser 30 von 2047 mm hat ein Prototyp des Erfinders eine Getriebelänge 31 von gerade einmal 1239 mm, während die Nabe 2 eine axiale Länge 32 von 2262 mm hat. Die Gesamtlänge über die Nabe 2, das Getriebe 4 innerhalb der Welle 3 und dem sich anschließenden Generator 5 beträgt 6139 mm.

In dieser Kompaktbauweise ist das tubulare Getriebesystem in die drehende Rotorwelle 3 integriert. Die Rotorwelle 3 ist somit gleichzeitig rotierendes Getriebegehäuse. Die Drehmomentstütze 14 ist als Scheibe an den Hauptlageraußenring 11 geschraubt, und der Generator 5 ist direkt dahinter angeflanscht. Alle relativen Hauptlagerbewegungen werden über die flexiblen Planetenbolzen in flex-pin-Technologie egalisiert.

Bei geeigneter Gestaltung wird ein Baukastensystem zur Verfügung gestellt, basierend auf einem integrierten Hauptlager mit einstellbarer Steifheitscharakteristik im Turm nach dem Einbau.

Eine Kombination aus Hauptschaft, Hauptlager, mehrstufigem Planetengetriebe, torsionsbegrenzender Rutschkupplung und Ringgenerator, konzentrisch eingebaut in einem großen Durchmesser gegenüber dem Rotor macht dies ohne weiteres möglich.

Ein offset angeordnetes Getriebe ist nicht notwendig.

Eine solche Gestaltung kann dazu führen, dass nur langsam rotierende Teile in der Gesamtanordnung vorhanden sind, was die Langlebigkeit und die Betriebssicherheit des Getriebes erhöht. Die Übersetzung beträgt bei einem Prototypen des Erfinders 12,25, sodass der Generator mit etwa 300 U/min eine mittlere Geschwindigkeit hat.

Das Getriebe kann einschließlich Rotor und Stator binnen weniger als zwei Stunden vollständig demontiert und teilweise oder vollständig ausgetauscht werden.

Die Hauptkomponenten weisen überdies RFID-Tags auf, mit denen eine elektronische Überwachung von erwarteter Lebensdauer und anderen Daten erleichtert wird.

Das vorgestellte integrierte Getriebekonzept kann sowohl mit langsam als auch mit schnell drehenden Abtriebswellen zum Einsatz kommen. Bei Hochgeschwindigkeit wird der Generatorflansch idealerweise direkt an das Getriebegehäuse angeschraubt. Dies minimiert Bewegungen und Verschleiß des Generators.

## Patentansprüche

1. Windkraftanlage mit einem Getriebe (4), wobei ein Drehmoment von einer Nabe (2) über eine Welle (3) zum Getriebe (4) übertragen wird, wobei das Getriebe (4) zumindest zum Teil innerhalb eines Hohlraums in der Welle (3) angeordnet ist wobei die Welle (3) einen Planetenträger (8) für ein Planetengetriebe aufweist,
wobei ein Hauptlageraußenring (11) die Welle (3) umgreift wobei die Well (13) in einem vorgespannten, axial zweigeteilten Wälzlager (12, 13) gelagert ist,
daduch gekennzeichnet, dass der Hauptlageraußenring (11), die Welle (3) on dieser Stelle und das in Inneren der Welle (3) befindliche Getriebe (4) axial auf der selben Höhe Liegen.

2. Windkraftanlage nach einen der Ansprüche 1, ***dadurch gekennzeichnet, dass*** das Getriebe als mehrstufiges Planetengetriebe ausgebildet ist, wobei mindestens eine Stufe vollständig innerhalb der Welle angeordnet ist.

3. Windkraftanlage nach einem der vorhergehenden Ansprüche, ***dadurch gekennzeichnet, dass*** die Welle ein rotierendes Hohlrad (24) für ein Planetengetriebe aufweist.

4. Windkraftanlage nach Anspruch 3, ***dadurch gekennzeichnet, dass*** das rotierende Hohlrad (24) und der Planetenträger (8) unterschiedlichen Stufen zugeordnet sind, welche gekoppelt sind.

5. Windkraftanlagen nach Anspruch 4, ***dadurch gekennzeichnet, dass*** das Getriebe eine erste Stufe aufweist, bei welcher die Welle (3) einen Planetenträger (8) aufweist, während eine Sonne (18) mittelbar zu einem Generator (5) führt, wobei ein Hohlrad durch eine Kopplung (22) zu einer zweiten Stufe ausgebildet ist, bei welcher die Welle (3) ein Hohlrad (24) aufweist, ein Planetenträger (26) fixiert ist, und die Kopplung (22) als Sonne (23) ausgebildet ist.

6. Windkraftanlage nach einem der vorhergehenden Ansprüche, ***dadurch gekennzeichnet, dass*** eine Drehmomentstütze (14) mit einem Hauptlageraußenring (11) verbunden ist.

7. Windkraftanlage nach einem der vorhergehenden Ansprüche, ***dadurch gekennzeichnet, dass*** Planeten auf flexiblen Planetenbolzen (17) gelagert sind.

8. Windkraftanlage nach einem der vorhergehenden Ansprüche, ***dadurch gekennzeichnet, dass*** das Getriebe (4) zum Demontieren axial aus der Welle (3) ziehbar gestaltet ist.

## Claims

1. A wind power installation with a gear unit (4), wherein a torque from a hub (2) is transmitted via a shaft (3) to the gear unit (4), wherein the gear unit (4) is arranged at least in part inside a hollow space in the shaft (3),
wherein the shaft (3) has a planetary carrier (8) for a planetary gear unit,
wherein a main bearing outer ring (11) encompasses the shaft (3),
wherein the shaft (3) is mounted in a pretensioned rolling bearing (12, 13) which is axially divided in two,
***characterized in that*** the main bearing outer ring (11) and the shaft (3) are located at this point and the gear unit (4) located in the interior of the shaft (3) is located axially at the same height.

2. The wind power installation according to Claim 1, ***characterized in that*** the gear unit is constructed as a multi-stage planetary gear unit, wherein at least one stage is arranged completely inside the shaft.

3. The wind power installation according to one of the preceding claims, ***characterized in that*** the shaft has a rotating ring gear (24) for a planetary gear unit.

4. The wind power installation according to Claim 3, ***characterized in that*** the rotating ring gear (24) and the planetary carrier (8) are assigned to different stages which are linked.

5. The wind power installation according to Claim 4, ***characterized in that*** the gear unit has a first stage in which the shaft (3) has a planetary carrier (8), while a sun (18) drives indirectly to a generator (5), wherein a ring gear is constructed by a linkage (22) to form a second stage, in the case of which second stage the shaft (3) has a ring gear (24), a planetary carrier (26) is fixed, and the linkage (22) is constructed as a sun (23).

6. The wind power installation according to one of the preceding claims, ***characterized in that*** a torque support (14) is connected to a main bearing outer ring (11).

7. The wind power installation according to one of the preceding claims, ***characterized in that*** planets are mounted on flexible planetary bolts (17).

8. The wind power installation according to one of the preceding claims, ***characterized in that*** the gear unit (4) is designed such that it can be axially pulled out of the shaft (3) for disassembly.

## Revendications

1. Eolienne avec un engrenage (4), pour laquelle un couple d'un moyeu (2) est transmis par un arbre (3) à un engrenage (4), l'engrenage (4) étant disposé au moins en partie à l'intérieur d'une cavité dans l'arbre (3),
l'arbre (3) comportant un porte-satellites (8) pour un train épicycloïdal,
une bague extérieure de palier principal (11) enveloppant l'arbre (3),
l'arbre (3) étant monté dans un palier à rouleaux (12, 13) précontraint, axialement partagé en deux,
***caractérisée en ce que*** la bague extérieure de palier principal (11), l'arbre (3) à cette place et l'engrenage (4) se trouvant à l'intérieur de l'arbre (3) sont placés axialement à la même hauteur.

2. Eolienne selon la revendication 1 ***caractérisée en ce que*** l'engrenage est constitué comme un train épicycloïdal à plusieurs étages, un étage au moins étant disposé complètement à l'intérieur de l'arbre.

3. Eolienne selon une des revendications précédentes ***caractérisée en ce que*** l'arbre comporte une roue creuse (24) en rotation pour un train épicycloïdal.

4. Eolienne selon la revendication 3 ***caractérisée en ce que*** la roue creuse (24) en rotation et le porte-satellites (8) sont affectées à différents étages qui sont accouplés.

5. Eolienne selon la revendication 4 ***caractérisée en ce que*** l'engrenage comporte un premier étage, pour laquelle l'arbre (3) comporte un porte-satellites (8) tandis qu'un planétaire (18) conduit indirectement à un générateur (5), une roue creuse étant constituée par un accouplement (22) à un deuxième étage, pour laquelle l'arbre (3) comporte une roue creuse (24), un porte-satellites (26) est fixée et l'accouplement (22) est constitué comme un planétaire (23).

6. Eolienne selon une des revendications précédentes ***caractérisée en ce qu'**une* barre anti-couple (14) est reliée à une bague extérieure de palier principal (11).

7. Eolienne selon une des revendications précédentes ***caractérisée en ce que*** des satellites sont montés sur des axes de satellites souples (17).

8. Eolienne selon une des revendications précédentes ***caractérisée en ce que*** l'engrenage (4) est conçu de manière à pouvoir être tiré axialement de l'arbre (3) pour le démontage.
